# EUROPEAN PATENT SPECIFICATION

(11) **EP 1 610 019 B1**
(45) Date of publication and mention of the grant of the patent: **22.09.2010**
(21) Application number: 05253904.6
(22) Date of filing: 23.06.2005
(51) Int. Cl.: F16D 25/0638, F16D 25/12

(54) **A hydraulically operable coupling**
Hydraulisch betätigbare Lamellenkupplung
Embrayage multidisques à commande hydraulique

(30) Priority: 25.06.2004 GB 0414236
(43) Date of publication of application: 28.12.2005
(73) Proprietor: Ford Global Technologies, LLC, Dearborn, MI 48126 (US); Countytrac Limited, Ashford, Kent TN23 1EW (GB)
(72) Inventor: May, Eric, Kent ME10 2SZ (GB)
(74) Representative: Grunfeld, David Peter

(56) References cited:
- EP-A1- 0 057 599
- EP-A1- 0 770 790
- WO-A-03/095256
- US-A1- 5 310 388

## Description

### Field

This invention relates to a hydraulically operable coupling suitable for a vehicle transmission and in particular but not exclusively to vehicles having an all wheel drive facility, and to transmissions assemblies therefor.

### Background of the Invention

Four wheel drive vehicles normally operate in two wheel drive (2WD) and have part time alternative drive wheels that are controlled to operate when four wheel drive (4WD) is necessary.

One conventional method of operation is a manual shift operated by the vehicle driver between 2WD and 4WD and this is normally achieved by means of a second gear stick located in the vehicle drive compartment.

Another method of operation is for the vehicle to be provided with electronic and hydraulic sensors and controls which automatically split the torque output from the engine so as to supply torque to the driven wheels based on interrogation of the sensors by the control system.

Document EP 0 057 599, which is considered as the closest prior art, discloses a rotary transmission coupling for a vehicle.

In WO 03/095256 the present applicant describes a vehicle transmission system in which a normally 2WD drive train also drives the alternative wheels under particular conditions. The control is purely mechanical having a hydraulically operable clutch of the type described in US-A-5310388.

The clutch described in US-A-5310388 is a multi-plate friction clutch located in a housing containing transmission fluid and the clutch plates are clamped together by a hydraulic piston which is actuated by hydraulic pressure generated by pumped transmission fluid.

The volume of pumped fluid and hence the clamping pressure on the clutch plates is related to the rotational speed difference between the housing and the output shaft which in turn is related to the rotational speed of the normally driven wheels (2WD) and the rotational speed of the alternative drive wheels in 4WD. For example, if the driven wheels spin then the speed differential between the normally driven and alternatively driven wheels triggers the system to engage the alternative wheels.

A problem with purely mechanical all wheel drive systems arises during normal steering of a vehicle when the driven road wheels across an axle rotate at different speeds. If the rotation of any pair of wheels is locked this can result in wind up of the drive train.

The present invention provides an improved vehicle final drive assembly which is particularly useful for vehicles having a primary wheel drive and a secondary wheel drive.

### Statements of Invention

According to a first aspect of the present invention there is provided a transmission coupling having a rotary input and at least one rotary output connected to the input through a clutch located within a casing, the clutch being operated by a hydraulic actuator actuated by hydraulic pressure generated by a pump which is operated by the speed differential between said input and outputs, and a valve responsive to the hydraulic pressure to permit actuation of the clutch above a predetermined hydraulic pressure, the valve being located in a wall of the casing, the valve (120) being operable to divert pressurized hydraulic fluid from the actuator (104) when the hydraulic pressure is below said predetermined pressure to prevent operation of the actuator (104).

The valve comprises a piston slidable within a bore formed in said wall and having passageways therein to permit the flow of hydraulic fluid therethrough unless said piston and bore co-operate to close the passageways.

Preferably the valve comprises a stepped diameter piston housed in stepped diameter bore, the passageways comprising axial passageways in the larger diameter portion of the piston and both axial and radial passageways in the smaller diameter portion of the piston, and flow through the passageways is closed by the wall of the smaller diameter portion of the bore.

The piston is biased to an open passageway condition by spring means.

The casing acts as the rotary input and may be caused to rotate by means of an input shaft having a pinion thereon which engages a ring gear on the casing.

The clutch preferably comprises a multi-plate friction clutch and the hydraulic pressure determines the clamping load on the clutch plates.

The multi-plate clutch comprises a stack of annular friction plates having alternate plates rotationally fast with the casing and output shaft through their outer and inner peripheries respectively. The casing becomes rotationally fast with said output shaft when the clutch plates are compressed by a hydraulic actuator. The actuator piston is actuated by hydraulic pressure generated by a pump operated by differential rotational speed between the casing and output shaft.

Another aspect of the invention provides a vehicle final drive assembly operable between a pair of wheels across an axle and comprising an input shaft, a pair of transmission couplings according to the first aspect of the invention, the two casings of which are rotatably connected in parallel to the input shaft, each coupling having its output shaft rotatably connected to said input shaft through the clutch and in use driving a respective wheel.

Preferably the two casings are interconnected by a cross shaft and the input shaft engages with one of said casings.

According to another aspect of the invention there is provided a transmission assembly for a motor vehicle and which includes a change speed transmission having an input shaft connectable to a vehicle engine, and a transmission main output shaft connected to a primary drive axle, and a final drive assembly according to a second aspect of the invention for a secondary drive axle.

The final drive assembly is arranged with the two hydraulically operated coupling being spaced apart and located one on each side of the transmission assembly, preferably either side of the bell housing.

A further aspect of the invention provides a motor vehicle having a final drive assembly according to the first aspect of the invention, driveably connected to either of a pair of front wheels or a pair of rear wheels not being on the primary drive axle.

### Description of the Drawings

The invention will be described by way of example and with reference to the accompanying drawings in which:
- Fig.1: is schematic view of a motor vehicle having a final drive assembly and transmission assembly having a coupling according to the present invention,
- Fig.2: is a sectional side view of a transmission assembly showing the final drive input shaft and one coupling,
- Fig.3: is a sectional view taken on the line III-III of Fig.2,
- Fig.4: is a section through a coupling as is used in the final drive assembly of Fig. 2,
- Fig.5: is a schematic layout hydraulic control system for the coupling,
- Fig.6: is an exploded isometric showing an oil flow valve,
- Fig.7: is an enlarged section showing the oil flow valve in an open condition, and
- Fig.8: is an enlarged section showing the oil flow valve in a closed condition.

### Detailed Description of the Invention

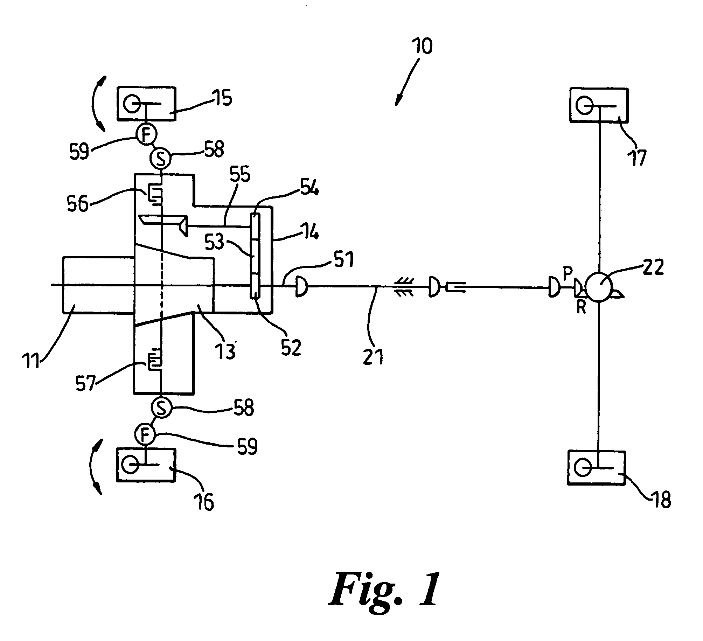

With reference to Fig.1, there is shown a motor vehicle 10 having an engine 11 arranged longitudinally of the vehicle. A transmission assembly 13 is mounted on the rear of the engine and includes a final drive assembly 14 which drives the front wheels 15 and 16, and the rear wheels 17 and 18. The primary drive is to the rear wheels 17 & 18 which are driven by the transmission main shaft 51 via a conventional drive shaft 21 and differential unit 22 having the typical ring gear R and pinion P.

A secondary drive for the front wheel 15 & 16 is taken off the main transmission shaft 51 via gears 52,53,54. The gear 54 drives an input shaft 55 of the secondary final drive assembly. The drive shaft 55 is connected in parallel to a pair of hydraulically operated couplings 56 and 57 which are in turn connected to respective wheels 15 or 16 through constant velocity joints 58 & 59.

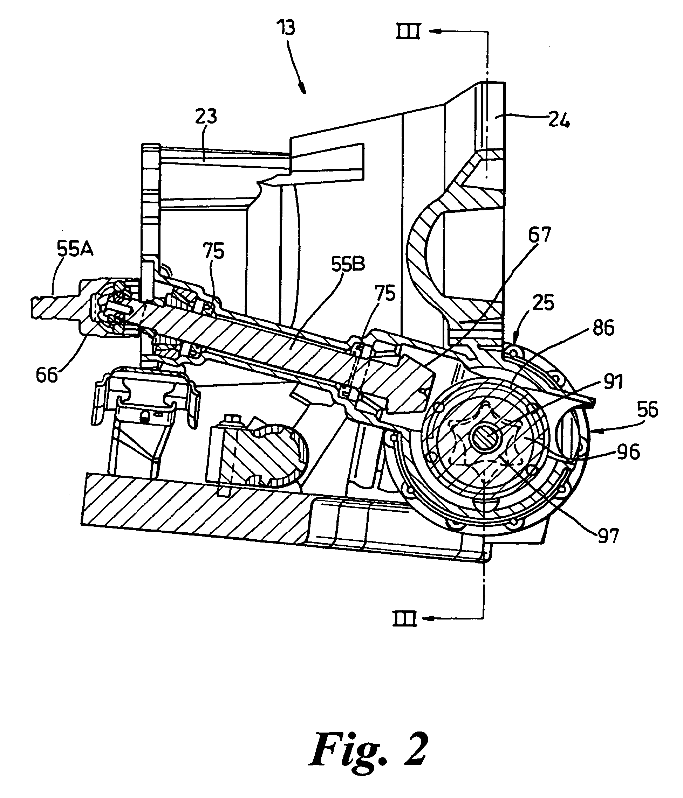

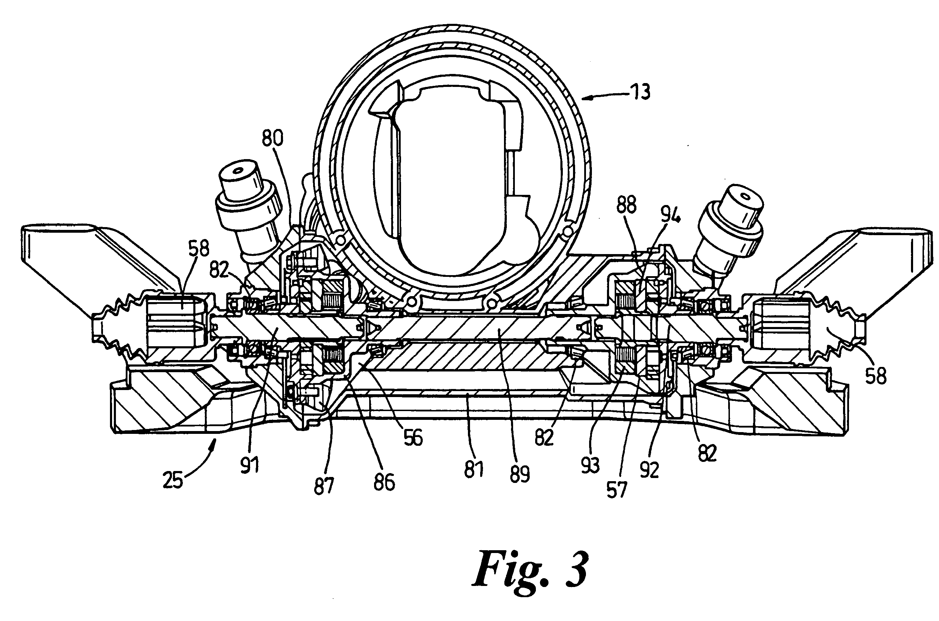

Referring also to Figs. 2 & 3, the transmission assembly 13 is described in detail in WO 03/095256 and will only be described in such detail as is necessary for an understanding of the present invention. The assembly 13 includes a gear box casing 23 which houses a plurality of change speed gears, as is well known, having a power input shaft which in use engages a drive coupling (not shown), typically a friction clutch, mounted on the rear of the engine 11 and enclosed in bell housing 24. The bell housing 24 is secured to, or formed integrally with, the gear box casing 23. The change speed gears drive the transmission main drive shaft 51 extending rearwardly from the transmission assembly.

The secondary drive to the front wheels 15 & 16 is substantially located in a final drive housing 25 which in turn is mounted to the gear box casing 23 and bell housing 24. The final drive assembly 14 and its housing 25 are arranged so as to have a particular shape and configuration within the vehicle engine compartment so as to avoid other components mounted on the engine or within the engine compartment.

The main drive shaft 51 connects with the secondary drive input shaft 55 as previously described. The driven gear 54 is fixed to an end portion 55A of the secondary input shaft 55 of the final drive assembly 14 to the front wheels 15 & 16. The final secondary drive input shaft 55 is rotatably supported in its housing 25 to one side of casing 23 by bearings 75. The shaft 55 is split into two portions, an upper portion 55A and a lower portion 55B. The driven gear 54 is fixed to the upper portion 55A which extend substantially parallel with the transmission shaft 51 and is connected to the lower portion 55B through a constant velocity joint 66. The lower portion 55B of the input shaft 55 is inclined downwardly and forwardly of the constant velocity joint 66. A pinion gear 67 on the lower end of shaft 55 is drivably connected to a differential system 80.

Splitting the input shaft 55 into two portions 55A & 55B linked via a universal joint enables the shaft and its portion of the housing 25 to be routed and shaped to avoid other components within the engine compartment.

The differential system 80 is mounted in a housing 81, forming part of the final drive housing 25, and extending across the front lower portion of the gear box casing 23 and bell housing 24. The housing 81 is suitably sealed and contains hydraulic fluid for operation of the hydraulically operated couplings 56 and 57.

The two couplings 56 & 57 are mounted for coaxial rotation in the housing 81 on bearings 82. The coupling 56 has a casing 86 of hollow construction which has a bevel gear ring 87 extending around its outer surface which meshes with the pinion 67 to form the differential 80. The casing 86 is mounted in the housing 81 by bearings 82 so that rotation of the shaft 55 causes the casing 86 to rotate. The casing 86 is connected to a similar casing 88 of the second hydraulically operated coupling 57 by a coaxial cross shaft 89 so that the pinion 67 drives both casings 86 and 88 in parallel. The two couplings 56 and 57 drive respective coaxial half shafts 91,92 which are in turn connected to the wheels 15 and 16 through constant velocity joints 58.

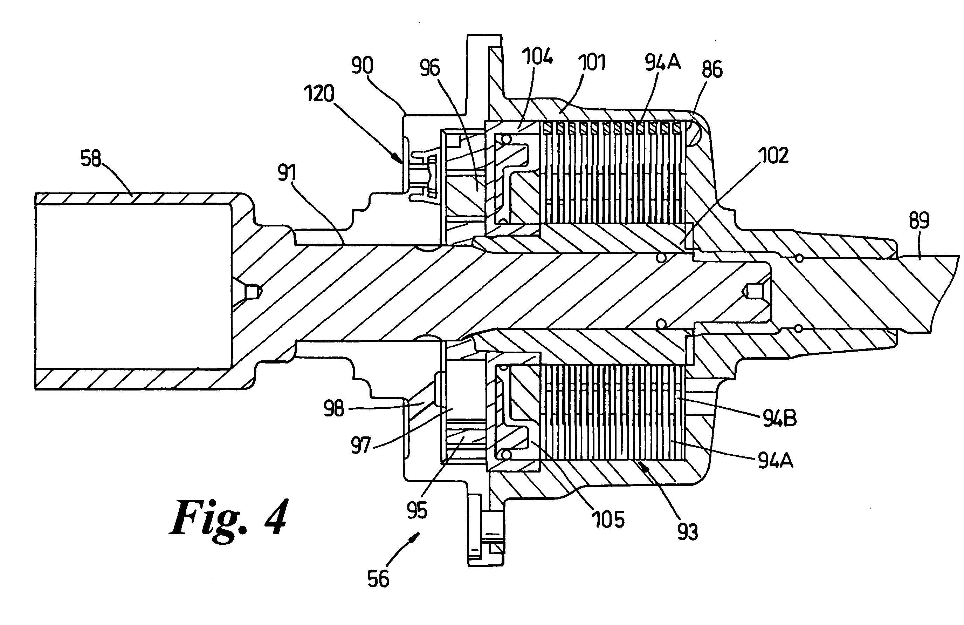

The hydraulically operated couplings 56 and 57 are of similar construction and therefore only coupling 56 will be described in detail with reference to Fig. 4, the other operating in a similar manner. The casing 86 comprises a cover 90 and a hollow cylindrical housing 101 enclosing a multi-plate friction clutch 93 operable in hydraulic fluid. The multi-plate clutch 93 comprises a stack of annular friction plates 94 having alternate plates 94A and 94B resepectively, rotationally fast with the casing 86, or clutch hub 102, through their outer and inner peripheries respectively. The hub 102 is rotationally fast with the half shaft 91. The casing 86 becomes rotationally fast with the half shaft 91 when the clutch 93 is compressed by a hydraulic actuator 104.

The hydraulic actuator 104 is actuated by hydraulic pressure generated by a bi-directional oil pump 95. The oil pump 95 comprises an internal ring gear 96 mounted in the casing 88 for eccentric rotation relative to a multi-lobed impeller 97 mounted on the half shaft 91. Hydraulic fluid in the housing enters the pump via apertures 98 in the casing 86.

The hydraulic pressure generated by the pump 95 operates the actuator piston 105 to cause engagement of the clutch when there is relative rotational movement between the half shaft 91 and the casing 86. A more detailed explanation of the operation of the couplings is given in US 5310 388.

When a vehicle is driving normally along a highway, the primary drive is through the differential 22 and back axle. Since the front wheel half shafts 91,92 are rotating at the same speed as the casings there is essentially no drive through the front wheels. If in a particular situation, the front wheels slip so that there is a difference in rotational speed between a half shaft 91, or 92 and its respective casing 86 or 88, then the oil pump 95 operates to develop sufficient pressure actuating the piston 105 to clamp the friction clutch 93, thereby transmitting drive from a casing 86 or 88 to a respective wheel. The drive is supplied to each wheel completely independently of the other wheel across the front axle.

However, if the vehicle is turning and the differential rotation is due to the turning action it is undesirable for the piston 105 to clamp the clutch plates 94. In order to prevent operation of the clutch 93 in such circumstances, a hydraulic control valve 120 is provided to divert pressurized fluid from the pump away from the actuator 104 when the fluid pressure is below a predetermined pressure.

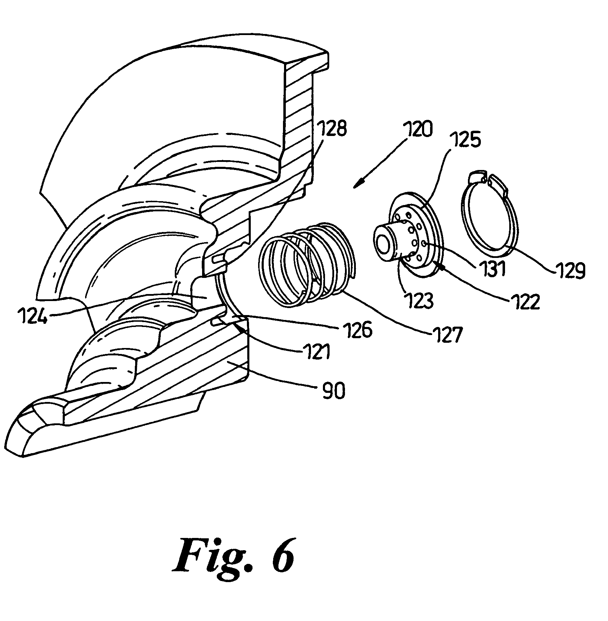

The control valve 120 is shown in Figs 6-8 and comprises a stepped bore 121 formed in cover 90 with a piston 122 reciprocably slidable within the bore 121. The bore 121 has a smaller diameter portion 124 and a larger diameter portion 126 with a shoulder 128 therebetween. The piston 122 is a stepped piston having a smaller diameter portion 123 slidable within the smaller diameter portion 124 of the bore 121 and a larger diameter portion 125 accommodated within the larger diameter portion 126 of the bore 121. The piston 122 is biased away from the smaller diameter portion 124 of the bore 121 by a spring 127 acting between the shoulder 128 and the larger diameter portion 125 of the piston. The movement of the piston 122 away from the smaller diameter portion 124 of the bore is limited by an abutment 129 in the form of a circlip.

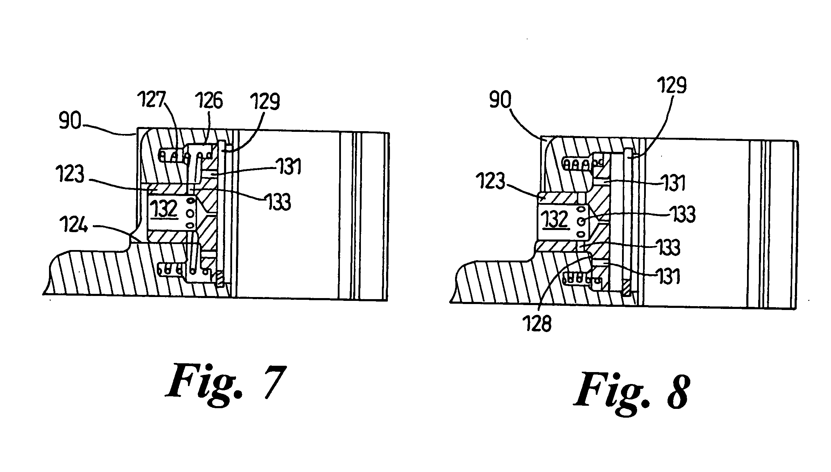

As is best seen in Figs 7 & 8, the larger diameter portion 125 of the piston 122 has a plurality of axial passageways 131 connecting the front and back faces thereof. The smaller diameter portion 123 of the piston is hollow having an axially extending central passageway 132 connected to the outer surface thereof by radial passageways 133. The radial passageways are located in the smaller diameter portion at its end adjacent the larger diameter portion 125. The spring 127 biases the piston 122 towards the abutment with the circlip 129 as shown in Fig. 7.

In this condition, when the pump 95 generates lower fluid pressure, for example from a low speed differential of the type generated when turning, the low pressure fluid may pass through the passageways 131,133, and 132 and go to drain in the bottom of the housing 81. This diversion of low/medium pressure fluid prevents the operation of the actuator 104.

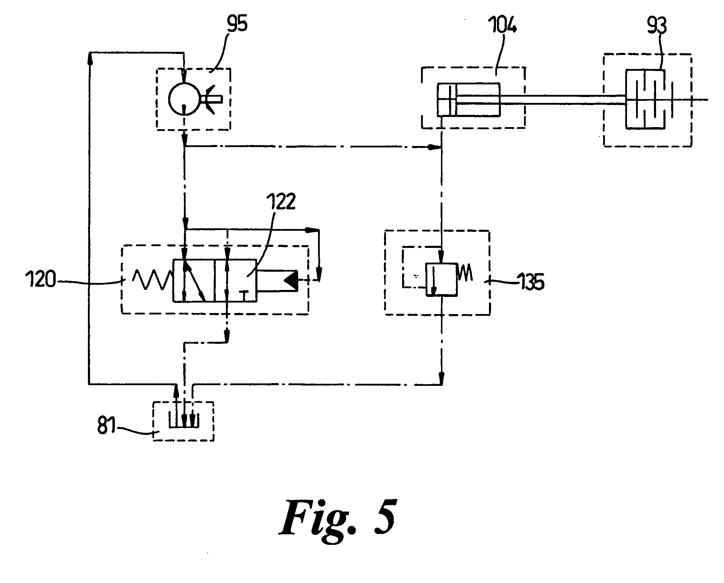

As the hydraulic pressure builds, during for example wheel slip, the pressure acting on the larger diameter portion 125 of the piston eventually causes the piston to move against the spring bias and seat against the shoulder 128. In this condition as shown in Fig 8, the shoulder 128 closes the passageways 131, and the small diameter bore 124 closes the radial passageways 133. All the pumped fluid pressure is now available for operation of the actuator. Any excess pressure may be drained through an oil pressure relief valve 135 (see Fig 5) in the wall of the pump 95.

The operation of the valve 120 is shown schematically in Fig.5. The oil flow from the pump 95 passes to the valve 120 and to the actuator 104. The pressurized fluid at the valve 120 acts on the face of the piston 122 and may pass through the passageways to drain, ie the fluid reservoir in the housing 81.

If the flow to the drain is closed or choked, then the fluid pressure acting in the actuator rises. The oil pressure relief valve 135 limits the upper pressure acting within the actuator.

## Claims

1. A rotary transmission coupling (56) having a rotary input (86) and at least one rotary output (91) connected through a clutch (93) located within a casing (86), the clutch (93) being operable by a hydraulic actuator (104) responsive to hydraulic pressure generated by a pump (95) operated by the rotational speed differential between said input (86) and said output (91), and a valve (120) also responsive to the hydraulic pressure to permit actuation of the clutch (93) above a predetermined hydraulic pressure, the valve (120) being located in a wall (90) of the casing (86), **characterised in that** the valve (120) is operable to divert pressurized hydraulic fluid from the actuator (104) when the hydraulic pressure is below said predetermined pressure to prevent operation of the actuator (104).

2. A coupling as claimed in claim 1, wherein the valve (120) comprises a piston (122) slidable within a bore (121) formed in said wall (90) and having passageways (131, 132, 133) therein to permit the flow of hydraulic fluid therethrough unless said piston (122) and bore (121) co-operate to close the passageways (131).

3. A coupling as claimed in claim 2, wherein the valve (120) comprises a stepped diameter piston (122) housed in a stepped diameter bore (121), the passageways comprising axial passageways (131) in the larger diameter portion (125) of the piston (122) and radial passageways (133) in the smaller diameter portion (123) of the piston (122), the passageways being closed by interaction between the bore (121) and piston (122).

4. A coupling as claimed in claim 2 or 3, wherein the piston (122) is biased by resilient means (127) to open the passageways.

5. A coupling as claimed in any preceding claim, wherein said rotary input comprises the casing (86).

6. A coupling as claimed in any preceding claim, wherein the clutch (93) comprises a multi-plate friction clutch and the hydraulic actuator (104) exerts a clamping load on the clutch plates (94).

7. A coupling as claimed claim 6, wherein the multi-plate clutch comprises a stack of annular friction plates (94) having alternate plates rotationally fast with the casing (86) and output shaft (91) through their outer and inner peripheries respectively, the casing (86) becoming rotationally fast with said output shaft (91) when the clutch plates (94) are compressed by a hydraulic actuator (104).

8. A coupling as claimed in any preceding claim, and further including a housing (81) in which the casing (86) and rotary output (91) are rotatably mounted, an input shaft (55) also rotatably mounted in the housing to engage the casing (86), and hydraulic fluid stored within the housing (81) for operation of the clutch (93).

9. A vehicle final drive assembly operable between a pair of wheels across an axle and comprising an input shaft (55) and a pair of transmission couplings (56, 57) as claimed in any preceding claim, wherein the two casings (86) of said couplings are rotatably connected in parallel to the input shaft (55), each coupling (56, 57) having its output shaft (91, 92) rotatably connected to said input shaft (55) through the clutch (93) and in use driving a respective wheel.

10. A drive assembly as claimed in claim 9, wherein the two casings (86) are interconnected by a cross shaft (89) and the input shaft (55) engages with one of said casings (86).

11. A transmission assembly for a motor vehicle and which includes a change speed transmission (13) having an input shaft connectable to a vehicle engine (11), a transmission main output shaft (51) connected to a primary drive axle, and a final drive assembly as claimed in claim 9 or 10 connected to a secondary drive axle.

12. A motor vehicle having a final drive assembly to either a pair of front wheels or a pair of rear wheels and which is a final drive assembly as claimed in claim 9 or 10.

## Patentansprüche

1. Drehgetriebekupplungsvorrichtung (56) mit einem Dreheingang (86) und mindestens einem Drehausgang (92), die durch eine in einem Gehäuse (86) angeordnete Kupplung (93) verbunden sind, wobei die Kupplung (93) durch einen hydraulischen Aktuator (104), der auf einen von einer durch das Drehzahldifferenzial zwischen dem Eingang (86) und dem Ausgang (91) betriebenen Pumpe (95) erzeugten Hydraulikdruck reagiert, betätigt werden kann, und einem Ventil (120), das auch auf den Hydraulikdruck reagiert, um Betätigung der Kupplung (93) über einem vorbestimmten Hydraulikdruck zu gestatten, wobei das Ventil (120) in einer Wand (90) des Gehäuses (86) angeordnet ist, **dadurch gekennzeichnet, dass** das Ventil (120) dahingehend betätigt werden kann, druckbeaufschlagtes Hydraulikfluid von dem Aktuator (104) umzulenken, wenn der Hydraulikdruck unter dem vorbestimmten Druck liegt, um Betätigung des Aktuators (104) zu verhindern.

2. Kupplungsvorrichtung nach Anspruch 1, wobei das Ventil (120) einen Kolben (122) umfasst, der in einer in der Wand (90) ausgebildeten Bohrung (121) verschiebbar ist und Durchgänge (131, 132, 133) darin aufweist, um den Hydraulikfluidfluss dort hindurch zu gestatten, es sei denn, der Kolben (122) und die Bohrung (121) wirken zusammen, um die Durchgänge (131) zu schließen.

3. Kupplungsvorrichtung nach Anspruch 2, wobei das Ventil (120) einen Kolben (122) mit abgestuftem Durchmesser umfasst, der in einer Bohrung (121) mit abgestuftem Durchmesser untergebracht ist, wobei die Durchgänge axiale Durchgänge (131) in dem den größeren Durchmesser aufweisenden Teil (125) des Kolbens (122) und radiale Durchgänge (133) in dem den kleineren Durchmesser aufweisenden Teil (123) des Kolbens (122) umfassen, wobei die Durchgänge durch Zusammenwirkung zwischen der Bohrung (121) und dem Kolben (122) geschlossen werden.

4. Kupplungsvorrichtung nach Anspruch 2 oder 3, wobei der Kolben (122) durch ein elastisches Mittel (127) zum Öffnen der Durchgänge vorgespannt ist.

5. Kupplungsvorrichtung nach einem vorhergehenden Anspruch, wobei der Dreheingang das Gehäuse (86) umfasst.

6. Kupplungsvorrichtung nach einem vorhergehenden Anspruch, wobei die Kupplung (93) eine Reiblamellenkupplung umfasst und der hydraulische Aktuator (104) eine Klemmlast an die Kupplungslamellen (94) anlegt.

7. Kupplungsvorrichtung nach Anspruch 6, wobei die Lamellenkupplung einen Stapel ringförmiger Reibplatten (94) mit abwechselnden Platten, die durch ihren Außen- bzw. Innenumfang drehfest mit dem Gehäuse (86) und einer Ausgangswelle (91) sind, umfasst, wobei das Gehäuse (86) drehfest mit der Ausgangswelle (91) wird, wenn die Kupplungsplatten (94) durch einen hydraulischen Aktuator (104) komprimiert werden.

8. Kupplungsvorrichtung nach einem vorhergehenden Anspruch, die weiterhin eine Aufnahme (81) enthält, in der das Gehäuse (86) und der Drehausgang (91) drehbar angebracht sind, wobei eine Eingangswelle (55) auch drehbar in der Aufnahme angebracht ist, um das Gehäuse (86) in Eingriff zu nehmen, und Hydraulikfluid in der Aufnahme (81) zur Betätigung der Kupplung (93) gelagert ist.

9. Fahrzeugachsantriebsanordnung, die zwischen einem Paar Rädern an einer Achse betreibbar ist und eine Eingangswelle (55) und ein Paar Getriebekupplungsvorrichtungen (56, 57) nach einem vorhergehenden Anspruch umfasst, wobei die beiden Gehäuse (86) der Kupplungsvorrichtungen parallel drehbar mit der Eingangswelle (55) verbunden sind, wobei jede Kupplungsvorrichtung (56, 57) ihre Ausgangswelle (91, 92) durch die Kupplung (93) drehbar mit der Eingangswelle (55) verbunden hat und im Gebrauch ein jeweiliges Rad antreibt.

10. Antriebsanordnung nach Anspruch 9, wobei die beiden Gehäuse (86) durch eine Querwelle (89) miteinander verbunden sind und die Eingangswelle (55) mit einem der Gehäuse (86) in Eingriff steht.

11. Getriebeanordnung für ein Kraftfahrzeug, mit einem Wechselgetriebe (13) mit einer Eingangswelle, die mit einem Fahrzeugmotor (11) verbunden werden kann, einer Getriebehauptausgangswelle (51), die mit einer Primärantriebsachse verbunden ist, und einer Achsantriebsanordnung nach Anspruch 9 oder 10, die mit einer Sekundärantriebsachse verbunden ist.

12. Kraftfahrzeug mit einer Achsantriebsanordnung für entweder ein Paar Vorderräder oder ein Paar Hinterräder und bei der es sich um eine Achsantriebsanordnung nach Anspruch 9 oder 10 handelt.

## Revendications

1. Accouplement rotatif de transmission (56) comprenant une entrée rotative (86) et au moins une sortie rotative (91) reliées par l'intermédiaire d'un embrayage (93) situé dans un carter (86), l'embrayage (93) étant actionné par un actionneur hydraulique (104) en réponse à la pression hydraulique produite par une pompe (95) entraînée par le différentiel de vitesse rotative entre ladite entrée (86) et ladite sortie (91), et une soupape (120) fonctionnant également en réponse à la pression hydraulique pour permettre l'actionnement de l'embrayage (93) quand la pression hydraulique dépasse une valeur de pression prédéterminée, la soupape (120) étant montée dans une paroi (90) du carter (86), **caractérisé en ce que** la soupape (120) est actionnée pour détourner le fluide hydraulique pressurisé de l'actionneur (104) quand la pression hydraulique est inférieure à ladite valeur de pression prédéterminée, afin de prévenir le fonctionnement de l'actionneur (104).

2. Accouplement selon la revendication 1, la soupape (120) étant constituée par un piston (122) coulissant dans un alésage (121) ménagé dans ladite paroi (90) et comportant des passages (131, 132, 133) pour permettre l'écoulement du fluide hydraulique à travers lesdits passages à moins que ledit piston (122) et ledit alésage (121) ne coopèrent pour obturer les passages (131).

3. Accouplement selon la revendication 2, la soupape (120) étant constituée d'un piston à diamètre étagé (122) logé dans un alésage à diamètre étagé (121), les passages étant constitués de passages orientés dans le sens axial (131) ménagés dans la partie du piston (122) présentant le plus gros diamètre (125) et de passages orientés dans le sens radial (133) ménagés dans la partie du piston (122) présentant le plus petit diamètre (123), les passages étant fermés par l'interaction de l'alésage (121) et du piston (122).

4. Accouplement selon la revendication 2 ou 3, le piston (122) étant rappelé par un moyen élastique (127) afin d'ouvrir les passages.

5. Accouplement selon l'une quelconque des revendications précédentes, ladite entrée rotative étant constituée par le carter (86).

6. Accouplement selon l'une quelconque des revendications précédentes, l'embrayage (93) étant constitué d'un embrayage à friction de type multidisques et l'actionneur hydraulique (104) exerçant une force de serrage sur les disques d'embrayage (94).

7. Accouplement selon la revendication 6, l'embrayage multidisques étant constitué d'un empilement de disques annulaires de friction (94) comprenant, en alternance, des disques entraînés en rotation solidairement avec le carter (86) et avec l'arbre de sortie (91) par l'intermédiaire de leurs périphéries extérieure et intérieure, respectivement, le carter (86) étant entraîné en rotation solidairement avec ledit arbre de sortie (91) quand les disques d'embrayage (94) sont comprimés par un actionneur hydraulique (104).

8. Accouplement selon l'une quelconque des revendications précédentes et comprenant en outre un boîtier (81) dans lequel le carter (86) et la sortie rotative (91) sont montés rotatifs, et un arbre d'entrée (55) également monté rotatif dans le boîtier de manière à être en prise avec le carter (86), le fluide hydraulique étant contenu dans le boîtier (81) pour commander le fonctionnement de l'embrayage (93).

9. Ensemble différentiel de véhicule utilisable entre une paire de roues à travers un essieu, ledit ensemble différentiel étant constitué d'un arbre d'entrée (55) et d'une paire d'accouplements de transmission (56, 57) selon l'une quelconque des revendications précédentes, les deux carters (86) desdits accouplements étant reliés de façon rotative en parallèle à l'arbre d'entrée (55), chaque accouplement (56, 57) ayant son arbre de sortie (91, 92) relié de façon rotative audit arbre d'entrée (55) par l'intermédiaire de l'embrayage (93) et entraînant en fonctionnement une roue respective.

10. Ensemble différentiel selon la revendication 9, les deux carters (86) étant interconnectés par un arbre transversal (89) et l'arbre d'entrée (55) étant en prise avec un desdits carters (86).

11. Ensemble de transmission pour véhicule à moteur, comprenant une transmission à changement de vitesses (13) ayant un arbre d'entrée relié au moteur (11) du véhicule, un arbre principal de sortie de transmission (51) relié à un essieu moteur primaire, et un ensemble différentiel selon la revendication 9 ou 10 relié à un essieu moteur secondaire.

12. Véhicule à moteur équipé d'un ensemble différentiel pouvant être associé à une paire de roues avant ou à une paire de roues arrière et qui est un ensemble différentiel selon la revendication 9 ou la revendication 10.
